# EUROPEAN PATENT APPLICATION

(11) **EP 3 923 225 A1**
(43) Date of publication of application: **15.12.2021**
(21) Application number: 20179324.7
(22) Date of filing: 10.06.2020
(51) Int. Cl.: G06Q 30/02

(54) **METHOD FOR PERSONALIZATION OF DIGITAL INFORMATION**

(71) Applicant: Addrelevance, 3800 Sint-Truiden (BE)
(72) Inventor: Coopmans, Peter, 3800 Sint-Truiden (BE)
(74) Representative: Calysta NV

(57) **Abstract**

The invention relates to a system and a method for personalization of digital information, wherein the actions of a visitor of a digital medium are monitored by an analytics script in order to provide a personalized version of said digital information.

## Description

### Technical Domain

The present invention relates to a method for personalizing digital information and more specifically to analyse the actions of a visitor of digital media and presenting the type of information that matches with the actions of the visitor.

### Technological Background of the invention

The worldwide consume of digital information is increasing significantly since years and is foreseen to increase even more in the future. Already now the power consumption caused by the consume of digital information is huge. A significant part responsible for this power consumption is the search for the correct digital information. The personalization of digital information to users plays an important role in the future to reduce the power consumption caused by searching for the correct digital information. In addition, the users loose a lot of time searching for the correct information they need. This time loss of the users consuming digital information can be reduced by the correct personalization of content.

A variety of methods exist for selecting the appropriate digital information for a given visitor on a digital media, this selection being often based on keywords which have been typed often by said visitor. Advertisers for example provide their digital information containing advertisements to an advertising network and specify which keywords or type of sites match their advertisement. These specified keywords will then be compared with the most used keywords by said visitor and cause the appropriate advertisement to be displayed. These advertisements or digital information often results in very low click through ratio's (CTR) and Conversion rates (CR) therefor resulting in a low return on investment (ROI) for the person or company paying for the advertisement, generating a low revenue for the publisher of the advertisement, as they often receive a revenue based on the CTR or CR. The visitor of the digital platform - displaying the digital information or advertisement - at his/her end, will receive digital information presented in a non-interesting way for him/her which leads to him/her being annoyed when consulting the digital media.

Methods similar to the method mentioned in the beginning are well known in the art. For example US7062510B1 describes a method for selecting a specific advertisement for a visitor based on the purchase history of the visitor. The system will load all the previous purchases in the memory and will determine a purchase vector. This vector represents the product preferences for said visitor and is used to determine a selection of products from the catalogue of the merchant. The selection of products from the catalogue of the merchant will be presented as digital information to the visitor. Unfortunately, this method already requires some purchases being made on the digital platform of the merchant, in order to have a determination of a set of products to be displayed.

The method according to KR20180121466 presents a personalized product recommendation method. This method makes use of behaviour monitoring and a product catalogue to select the product that matches best with the behaviour of the visitor. According to this document, machine learning can be used to further improve the prediction of the product matching the behaviour of the visitor. This method however represents the drawback of showing a general representation of the advertisement, often not triggering the visitor to click on the advertisement and place an order.

US7062510 discloses to establish a psychographic profile and viewing habits of a user and to select advertisement based on the profile and viewing habits.

The known methods are based principally on demographic data of the users and their viewing habits and generally still result in a suboptimal ROI generated by the advertisement contained in the digital information due to a low click-through ratio, mainly because the pushed advertises are just substitutes of the advertises consulted and searched by the visitor.

There exists a theory in digital marketing about the different approaches of users taking decisions. These approaches vary on two scales or dimensions, one indicating the velocity of taking the decision and another indicating the emotionality (emotional versus logic). Normally four approaches are distinguished, a competitive approach taking decisions quickly and logically, a spontaneous approach taking decisions quickly and emotionally, a methodical approach taking decisions slowly and logically and a humanistic approach taking decisions slowly and emotionally. It is known that the users of these different approaches require different information for taking a decision. This theory is incorporated into online marketing by including all the information necessary for all four decision approaches. However, it was not yet possible to find parameters from the user behaviour allowing to predict which decision approach a user is following, neither by human analysis nor by a computer analysis. This is why this therory can not be used for automatic personalizing of digital information.

There is therefore a general need to increase the CTR (Click-Through-Ratio) and/or the CR of said digital information. Such an increase of the CTR will decrease the overload of non-relevant digital information for the end-users and the worldwide waste of power for displaying the wrong information to the end-user.

### Summary of the invention

It is foreseen according to one embodiment of the present invention, a method, a system and a computer program according to the independent claims.

The inventor managed to identify different user profiles of visiting users which distinguish based on their decision taking approach. This is done with the help of machine learning. This allows to make personalization of content based on the decision taking approach of the users. This allows to show each user the relevant information necessary for his decision taking. This reduces the time of the users searching for the information necessary for their decisions. Thus, this reduces the power waste of digital information consume and increases the efficiency of the users navigating the digital information.

It is foreseen according to one embodiment of the present invention, a method for providing personalized digital information to a digital media, according to the actions of a user on said digital media and/or for personalizing content and/or presentation of digital information on a digital media according to a predicted profile out of a series of profiles, the method comprising the step of: i) Defining a series of profiles n₁, ... , nₙ. These profiles are preferably carefully chosen to categorize visitors of the digital medium in different groups, according to their buying behavior or more precisely their buying decision making process for example. ii) Requesting/creating building blocks for digital information related to one or more products or services in a digital information database of digital information management system or content management system (CMS) or to request digital ads from an ad server of a publisher, to build digital information or serve digital ads adapted to each n^{th} profile in said series of profiles provided to be displayed on said digital media. iii) Attributing by a machine learning engine comprising at least a processor and a computer readable medium, one specific profile from said series of profiles n1, ..., nₙ to a user consulting/visiting said digital media by analyzing key parameters (in machine learning also called features) for said specific user stored in an analytics database describing the behavior of users on the digital media and writing said attributed profile to a cookie of said user on a computer readable medium. iv) Sending a signal by said processor comprising an identifier of the attributed profile stored in said cookie on said computer readable medium to said digital information management system. v) Selecting and downloading based on said signal at least one building block for personalized content and/or presentation of digital information and collecting the corresponding content and layout corresponding to said attributed profile from said digital information database comprised in said digital information management system vi) Presenting said digital information by combining the personalized content and layout and displaying it on said digital media.

It is foreseen according to one embodiment of the present invention, a method for personalizing content and/or presentation of digital information on a digital media according to a predicted profile out of a series of profiles comprising: i) Defining a series of profiles n₁, ... , nₙ; ii) Creating building blocks b₁, b₂, ..., bₓ of digital information related to one or more products or services in a digital information database comprised in a digital information management system of a publisher of digital information, to build digital information adapted to each n^{th} profile in said series of profiles n₁, ..., nₙ provided to be displayed on said digital media; iii) Attributing by a machine learning engine comprising at least a processor and a computer readable medium, one specific profile from said series of profiles n1, ..., nₙ to a user consulting said digital media, by analyzing a series of key parameters p₁, p₂, ... p_{z} related to said specific user, stored in an analytics database storing said key parameters describing the actions of users on the digital media and writing said attributed profile to a cookie of said user on a computer readable medium or to a computer readable medium of said digital medium; iv) Reading said cookie or said computer readable medium of said digital medium by said digital information management system, to obtain said attributed profile for said user; v) Querying said digital information database by said digital information management system and downloading, based on said attributed profile obtained from said cookie, at least one b^{th} building block containing digital information adapted to said predicted profile; vi) Presenting said at least one b^{th} building block containing digital information by combining the personalized content and layout on said digital media.

The present invention further relates to a system for personalizing digital information to be displayed on a digital media comprising: i) A digital information database managed by the publisher of said digital information, comprising a series of building blocks for said digital information, each building block in the series of building blocks matching to at least one profile in a series of predefined profiles n₁, ... nₙ, said digital information management system sending the appropriate building block corresponding to a predefined profile in a list of predefined profiles, upon receiving a signal comprising an identifier of said predefined profile. ii) An analytics database, comprising at least one processor and a computer readable medium, said analytics database storing values corresponding to key parameters defined in a series of key parameters p₁,p₂,...,p_{z} such as scrolling behavior, navigation behavior, CTR, CR, .... Said analytics database being further provided to store said set of key parameters describing the behavior of visitors of said digital medium. iii) A machine learning engine, comprising at least one processor and a computer readable medium, said machine learning engine matching said key parameters stored in said analytics database with a nₜₕ profile in said predefined series of profiles n₁,n₂,... n_{n. Said} machine learning engine allowing profile predictions in real-time while still analyzing a large amount of data presented in said analytics database. iv) An analytics script implemented on said digital media publishing the digital information, said script collecting said values corresponding to said key parameters defined in said series of key parameters, said script sending a signal comprising said values corresponding to said key parameters defined in said series of key parameters to said analytics database, said script receiving a signal comprising a profile prediction made by said machine learning engine for the visitor currently consulting the digital medium, said profile prediction containing an identifier of said predicted profile in the list of predefined profiles n₁, ... nₙ, said analysis script storing said identifier of said matched profile in a cookie or data layer, written on the computer readable medium of said digital media publishing said digital information. Said cookie or said data layer can be read out by a digital information system of the publisher to obtain said matched profile in order to query a digital information database from the publisher for building blocks matching said predicted profile. Said analytics script allowing the monitoring of the actions of a visitor, and uploading a set of key parameters to said analytics database, describing said actions. Said analytics script further being implemented to receive the predicted profile coming from the machine learning engine and to store it on a computer readable medium, so that said digital information database can consult it to provide the right building blocks.

Monitoring the user behavior of said user on said digital media by collecting values corresponding to one of said key parameters contained in said series of key parameters and sending signals comprising a value for each indicator in said series of key indicators for said specific user to said analytics database storing parameters describing the behavior of users on said digital media. It has been indeed realized according to the present invention that it is possible through tracking a set of key parameters ((i.e. scrolling, time spend on a page, type of content consumed on the digital platform,...), describing the actions of a visitor on a digital media and making a prediction based on the analysis of said key parameters in real-time by a machine learning engine to match an end-user with one of the profiles defined in a series of profiles characterizing the end-users, to solve at least a part of the aforesaid drawbacks by providing a system in which the digital information is adapted and more relevant to the visitor of the digital media and will increase the CTR (Click-through-Ratio) for the digital information.

The following embodiments refer to preferred embodiments of the invention.

In one embodiment, the series of profiles classify users based on the velocity to take decisions and the emotionality (logic vs emotional) to take a decision.

In one embodiment, the series of profiles comprise further a neutral profile. The neutral profile is preferably used, if the key parameters of the specific user are not (yet) sufficient to attribute one of the other profiles to the specific user.

In one embodiment, users of the competitive profile take decisions quick and logically, users of the spontaneous profile take decisions quick and emotionally, users of the methodical profile take decisions slowly and logically, users of the humanistic profile take decisions slowly and emotionally. The features slowly and quickly are qualitative features and are intended just to distinguish two groups of users, a first group (or a first type of profiles) of users that take decisions slowly and a second group (or a second type of profiles) of users that take decisions quickly, wherein the group of users taking decisions slowly take decisions faster than the group of users taking decisions quickly and vice versa. The features emotionally and logically are qualitative features and are intended just to distinguish two groups of users, a first group (or a first type of profiles) of users that take decisions logically and a second group (or a second type of profiles) of users that take decisions emotionally, wherein the first group of users taking decisions emotionally take decisions more based on emotions and/or less based on logic than the second group of users taking decisions logically and vice versa.

In one embodiment, the competitive profile comprise competitive buyers, the spontaneous profile comprise spontaneous buyers, the methodical profile comprise methodical buyers and the humanistic profile comprise humanistic buyers.

In one embodiment, the series of key parameters related to said specific user comprise the content consumed on the digital media. In preferred embodiment, the content of the digital media is categorized into different content types related to different profiles of the set of profiles, wherein the content consumed indicates the amount of different content types consumed by the specific user. In one embodiment, the different content types comprise a competitive content type related to the competitive profile, a spontaneous content type related to the spontaneous profile, a methodical content type related to the methodical profile and a humanistic content type related to the humanistic profile. In one embodiment, the method comprising the step of receiving user input from an administrator user for categorizing the content of the digital media into different content types. This step is preferably part of the configuration of the digital media for the method of personalization of content. The user of the different decision taking profiles consider normally different content types for making their decision. This can be used to classify the visiting users into the decision taking profiles. Since the profiles do not directly correspond to content related profiles, it was found out that the consumed content is still a powerful indicator for detecting the correct decision taking profile of the user.

In one embodiment, the series of key parameters of the specific user comprise at least one, preferably at least two, three or four of: a scrolling behaviour, a time spent on a page of the digital media, a time spent on the digital media, a click through ratio, a conversion rate, a number of return visits on digital media. Those indicators proved after numerous testing as the most promising for detecting the velocity and the emotionality of decision taking.

In one embodiment, the series of key parameters related to said specific user comprise a combination of the content consumed on the digital media and of at least one, preferably at least two, three or four of: a scrolling behaviour, a time spent on a page of the digital media, a time spent on the digital media, a click through ratio, a conversion rate, a number of return visits on digital media. The combination of the content consumed and at least one of those parameters proofed to detect the correct decision taking profile of the user with a low error.

In one embodiment, the user space of the specific user is a cookie of the specific user.

In one embodiment, the user information comprises one or more of an identifier of the specific user and/or at least some or all of the set of key parameters of the specific user.

In one embodiment, the building blocks of digital information in a digital information database comprises a first building block containing digital information matching to the competitive profile, a second building block containing digital information matching to the spontaneous profile, a third building block containing digital information matching to the methodical profile, a fourth building block containing digital information matching to the humanistic profile, wherein the digital information of the first to fourth building blocks are distinct from each other.

In one embodiment, the building blocks created in the digital information database are related to one or more products or services, wherein the building blocks comprise personalized building sub-blocks and at least one non-personalized building sub-block, wherein the building block presented for each profile comprises a combination of the at least one non-personalized building sub-block and at least one further personalized building block related to the attributed profile of the specific user.

In one embodiment, a neutral building block is shown to a user to which the neutral profile has been attributed. Preferably, the neutral building block is distinct from the building block of the other profiles. Preferably, the neutral building block corresponds to the non-personalized building block.

In one embodiment, the method comprising the step of training the machine learning engine by showing the different building blocks matching to the different profiles independently from a profile of the users visiting the digital media, wherein the machine learning engine is trained based on the reaction of the users on the building block independently from a profile of the users visiting the digital media shown to the users and based on the key parameters of the users. This measure allows to train the machine learning engine. To train the machine learning engine shall mean to train the model of the machine learning engine.

In one embodiment, the method comprising a training phase in which the building blocks matching to the different profiles are shown independently from a profile of the users visiting the digital media and a personalized phase in which the building blocks matching different profiles are shown to the users visiting the digital media based on the profiles attributed to the users, wherein the building blocks matching different profiles are shown to a certain portion of the users visiting the digital media in the personalized phase independent from a profile. Preferably, the machine learning engine is continuously trained in the personalized phase based on the reaction of the certain portion of users (e.g. 5-10%) on the building blocks shown to them independent from a profile and based on the key parameters of these users.

In a preferred embodiment according to the present invention, said attribution of said nₜₕ profile to said specific user by said machine learning engine of step iii is performed by using decision tree learning as predictive model. This machine learning model is able to follow the same approach as a human being, although being able to make the predictions instantly, adds a success change (in %) to each and every prediction and is able to handle a big set of data to be analyzed. Additionally, said decision tree learning already shows a decent accuracy rate when the data available in said analytics database is rather low.

In a more preferred embodiment according to the present invention, the machine learning engine makes use of a deep learning neural network to predict the probability of each profile in said series of profiles for said specific visitor by analyzing the values corresponding to the key parameters stored in said analytics database storing parameters describing the behavior of users on said digital media. This deep learning neural network can reach an even higher accuracy rates compared to the machine learning using the decision tree model, when provided with a large amount of data. A higher accuracy rate means a higher chance on attributing the right profile and therefor a higher CTR.

Preferably, the machine learning engine being a deep learning neural network is pretrained by analyzing values corresponding to key parameters copied from an already populated analytics database of the publisher to said analytics database monitoring the user-behavior on said digital media matched with one of the profiles selected from said series of profiles. This pretraining will make sure that the machine learning engine will already provide a higher prediction accuracy from the start, and thus a higher CTR.

More advantageously, the machine learning engine being a trained deep learning neural network will further train itself based on data collected in said analytics database storing key parameters describing the behavior of users on said digital media, after and implementation of the system. This will further increase the accuracy of the profile prediction after the system has been put in place. As the machine learning engine is able to learn out of the success achieved by previous predictions by analyzing the profile that was predicted to the set of parameters and if it resulted in an action or not.

Advantageously, said machine learning engine, connected to said analytics database, is programmed to use a decision tree model. Said decision tree model being provided to predict a probability rate for each nth profile in said series of profiles by analyzing said analytics database comprising key parameters for said visitor of said digital medium. Said decision tree model providing a decent prediction accuracy level when the dataset available in said analytics database is rather limited.

More preferably, said machine learning engine, connected to said analytics database, is a deep learning neural network, said deep learning neural network being provided to predict a probability rate for each nth profile in said series of profiles by analyzing said analytics database comprising key parameters for said visitor of said digital medium. The deep learning neural network providing an even more accurate profile prediction, when there is a sufficient amount of the data available in said analytics database.

Other embodiments according to method according to the present invention are mentioned in the appended claims

### Detailed description of the invention

As already said, the method according to the present invention provides steps for personalizing digital information to be presented to a visitor of a digital media. To provide said personalized information to a unique visitor, a list of profiles needs to be defined under which the visitors of the digital media can be categorized. Building blocks comprising a specific layout or content for each profile will be created in the digital information database of the publisher. These building blocks being provided to create a personalized digital information for a specific profile.

The system comprises preferably a processor. The method is preferably performed by a processor. The processor is preferably a server. The processor or server can comprise a plurality of processors or servers doing certain tasks in parallel or distributing different tasks on different processors/servers.

A digital media is a means for providing digital content to a plurality of users. The digital content of the digital media is preferably hosted on the server. The digital content is preferably consumed on user electronic devices (client device) like smartphone, computers, set top boxes, televisions, etc. The user electronic devices are connected over a network to the server or the digital media. The network comprises preferably the internet. However, other (closed) networks like a cable network, a cell phone network or a fibre glass network would also be possible as network. The digital media is preferably a website. However, the digital media could be also any other digital content providing system, like a video content system for televisions or set top boxes. The user electronic device comprises preferably a browser for accessing the digital media or website. However, it would also be possible that the user electronic device comprises a specific content application (different from a general content browser) for accessing the digital media. Such a specific content application could be for example an app on a smartphone or a tablet or a computer for connecting the user electronic device with digital media for consuming the content. A visitor of the digital media is also called a user. The digital media comprises preferably a plurality of pages. If the digital media is a website, the pages could be webpages. The pages are configured to be displayed/presented/shown to the user (via his client application, his browser and/or his client device). The user can (via his client application, his browser and/or his client device) navigate through the pages of the digital media. If the digital media is a digital content system whose digital content is shown over a client software/application or a client device, the pages could be the different display pages of the client software or the client device.

The set of profiles comprises a plurality of profiles under which visitors/user of the digital media can be categorized. Preferably, each user can be associated to (only) one profile. Preferably, the series of profiles classify users based on the velocity to take decisions and the emotionality (logic vs emotional) to take a decision. The decision is preferably a buying decision. However, the decision could also be the selection of a video from a video database or others or other decisions to take on the digital media. Preferably, the series of profiles comprise a competitive profile, a spontaneous profile, a methodical profile and a humanistic profile. Users of the competitive profile take decisions quick (i.e. quicker than users of the methodical and humanistic profile) and logically (i.e. more logical or less emotional than user of the spontaneous profile and humanistic profile). Users of the spontaneous profile take decisions quick (i.e. quicker than users of the methodical profile and humanistic profile) and emotionally (i.e. less logical or more emotional than users of the methodical profile and competitive profile). Users of the methodical profile take decisions slowly (i.e. slower than users of the competitive profile and spontaneous profile) and logically (i.e. more logical or less emotional than user of the spontaneous profile and humanistic profile). Users of the humanistic profile take decisions slowly (i.e. slower than users of the competitive profile and spontaneous profile) and emotionally (i.e. less logical or more emotional than users of the methodical profile and competitive profile). In a preferred embodiment, the series of profiles comprise further a neutral profile. The neutral profile is used, if the amount of data available for the key parameters of the specific user is not sufficient to attribute one of the other profiles to the specific user. This can be the case, when the user visits the digital media the first time.

The digital media, preferably a page of the digital media comprises a personalized spot for personalized content. The personalization area can cover a whole page of the digital media or just a sub-space of the digital media like a banner. The personalization area could also be a pop-up window or anything else. The personalization area is filled with a block of personalized content made up of at least one building block personalized based on the profile attributed to the user visiting the (page of the) digital media. In other words, at least one building block matching the profile of the user visiting the digital media is presented in (the personalization area of the) digital media to the user (via his client application, his browser and/or his client device). Preferably, the at least one building block shown in the personalization area constitute the personalization area content. The personalization area content is preferably a combination of two or more building blocks. The personalization area content comprises a combination of a personalized building block and at least one non-personalized building block. Preferably, the non-personalized building block which is used for all profiles, e.g. an image, e.g. a back-ground image covering the personalization area. The non-personalized building block could refer to the same topic, e.g. a product, a service or other. The at least one personalized building could comprise a building block for a sub-title and/or a building block for a call to action (CTA) button. The sub-title describes the non-personalized content, e.g. the common image, different for each profile. The CTA button shows and/or realizes the action when the button or the whole personalization area is clicked. The click can be by a touch, by a mouse click or by any other user selection made by a user input from the client device. Since the CTA buttons are different for the different profiles, also the landing page is different for each user profile. The landing page is the page where the user arrives when he clicks on the CTA button. The landing page can be a webpage of the digital media or could be a webpage of a different website. The combination of the non-personalized building block (independent from the profiles) and at least one personalized building block depending on the profile of the user is very efficient to personalize the same topic, e.g. the same campaign for a product or a service, to the different profiles. In general it is advantageous that CTA clicks related to the personalization area content or the building block matching the profile of the user leads to different landing pages for different profiles. A user space stores information for revealing the profile attributed of a user. The user space is preferably a cookie stored in the browser of the user on the user electronic device. The userspace could also be in a specific content application with an (anonymous) identifier for the user of the specific content application. In a less preferred embodiment, the user space could also be on a server. The user space stores preferably one or more of a user identifier, a profile of the user and/or key parameters of the user. In a preferred embodiment, all of the user identifier of the user, the profile of the user and/or the key parameters of the user. However, in other case, it could also be possible to save just one or just two of these information.

The user identifier identifies the user. The identifier of the user is preferably anonymous such that the real identity of the user can not be deduced from the user identifier. The user identifier could be a unique number or string not related to a real world identifier.

The profile stored in the user space is preferably any profile information identifying the profile attributed to the user out of the set of profiles, when he visited or visits the digital media. The profile information can be a profile identifier like a number or bit sequence associated with one of the profiles of the set of profiles. E.g. 0 for the neutral profile, 1 for the competitive profile, 2 for the spontaneous profile, 3 for the methodical profile and 4 for the humanistic profile. In one embodiment, it is also possible to attribute the two most likely profiles to the user. A first attributed profile being attributed by the machine learning engine 5 to the user with the highest likelihood and a second attributed profile being attributed by the machine learning engine 5 to the user with the second highest likelihood. In this embodiment, preferably the building block associated with the first attributed profile is shown and maybe also a building block associated with the second attributed profile.

The key parameters are parameters of the users visiting the digital media. In machine learning, these key parameters are often also called features. The system/method surveys the user behaviour and detects/tracks/stores for each user the values of the key parameters (short key parameters of the respective user). The key parameters comprise preferably one or more of a type of content consumed, a number of return visits on digital media, a number of page visits of the digital media, a time spent on a page of the digital media, a time spent on the digital media (also called session time), a scrolling behaviour (also called scrolling depth), a call to action (CTA) clicks.

The type of content consumed refers to the content a user consumes, e.g. he/she reads the technical specifications, reads a testimonial, use the price simulator or the car configurator. The content consumed could be measured by detecting content portions of the digital media or of the page which are shown to the user longer than a threshold and/or which are clicked by the user. Preferably, the content of the website is classified according to the profiles of the set of profiles. Preferably, the content of the website is classified as competitive content, spontaneous content, methodical content or humanistic content. The competitive content corresponds to content normally consumed by user of the competitive profile. The spontaneous content corresponds to content normally consumed by user of the spontaneous profile. The methodical content corresponds to content normally consumed by users of the methodical profile. The humanistic content corresponds to content normally consumed by users of the humanistic profile. On a website, different html elements like paragraphs (<p>), divisions (<div>), certain containers defined on the website are associated to the different content types, e.g. by html attributes or by a manual mapping table that indicates per URL the content type. Thus, each time a certain type of website element or page is watched it can be checked in the manual mapping table to what content type it belongs. For example, a specification table could be always referred to a methodical content, while experience reports are rather related to humanistic content.

The number of return visits is also called the number of sessions or just session. The number of return visits indicate preferably the number of visits of a user on the digital media in a defined time window, e.g. one day, one week, one month, 10 days. However, the number of return visits could also indicate an absolute number of visits of the user on the digital media. Two subsequent visits of the digital media are normally distinguished, if the user opens two different sessions and/or if the user closes the browser or client application between the two visits and/or if a predetermined period of inactivity lays between two activities in the same session.

The number of pageviews (shortly page visits) is preferably the number of pages a user views during one session. The page visits refer preferably to the average number pages a user views per session in his/her last or all sessions.

The time spent on the digital media (short session time) is preferably the average time of the user spent each session on the digital media. After each session of the user, the session time could be added to a total session time. Each time the session time is required, the total session time is divided by the number of sessions.

The time spent on the page (time on page) of the digital media is preferably the average time the user spent on the pages of the digital media. After each the user has viewed a page, the time spend on this page is added on a total page time. This is done for each page the user visits on the digital media. Each time the session time is required, the total session time is divided by the number of page views.

The scrolling behaviour, also called scrolling depth, indicates how far a user scrolls to the bottom of the page.

The CTA click indicates the fact, if the user has clicked on the shown personalization area with the personalized content or the CTA button. Preferably, there is one CTA click for each profile or more precisely for each personalized content shown to the users of each profile. The CTA clicks are used as user feedback to train the machine learning engine 5 in a training phase and/or to retrain or improve the machine learning engine 5 during a personalization phase. The CTA click number could also be a click-through ratio indicating the percentage of CTA clicks of one specific profile for the number of times the personalization contents (or building block) of this specific profile was shown to the user.

The system comprises preferably the digital media, an analytics database 4, a machine learning engine 5, a digital information database. The digital media 2, the analytics database 4, the information database and the machine learning engine 5 are run on a server. In a preferred embodiment, the server comprises at least two, preferably three, preferably 4 distinct servers running the digital media 2, the analytics database 4, the information database and the machine learning engine 5. In a preferred embodiment, the server comprises a first server for running the digital media and/or the digital information database and a second server (distinct from the first server) running the analytics database and the machine learning engine 5. Preferably, the first server comprises a first first server running the digital media 2 and a second first server (distinct from the first first server) running the digital information database. However, the digital media 2 and the digital information database Preferably, the second server comprises a first second server running the analytics database 4 and a second second server (distinct from the first second server) running the machine learning engine 5. However, the machine learning engine 5 and the analytics database 4 could also be running on the same server. However, the digital media 2, the analytics database 4, the information database and the machine learning engine 5 could be also running on the same server or be distributed differently on distinct servers. Subsequently, the function of the digital media 2, the analytics database 4, the information database and the machine learning engine 5 are described independently on which server they are running. A function which could be performed by any of the digital media 2, the analytics database 4, the information database and the machine learning engine 5 is just described in relation with the server of the system. Distinct servers are connected via a network, preferably the internet.

In a preferred embodiment, the system comprises further a plurality of user electronic devices. Each user electronic device comprises preferably a user space. However, in an alternative embodiment, the user spaces of the users could also be arranged on the server, e.g. the server of the analytics database 4 or the server of the digital media 2.

The system, method, the server and/or the digital information database 2 stores the different building blocks matching the different profiles so that there is at least one distinct building block for each profile. The building blocks and the personalized content were already described in more detail above.

The system, the method, the server and/or the digital media 2 is configured to monitor/track/detect the set of key parameters of the users, while the user is visiting the digital media. Preferably, an analytics script 1 is running on the digital media (preferably on the server of the digital media 2) which tracks the set of key parameters of the users, when they visit the digital media 2. The values of the set of key parameters tracked while the user is visiting the digital media 2 is stored in the user space of the user and/or in the analytics database 4, preferably both. The tracked values are preferably used to update the set of key parameters already stored in the user space of the user and/or in the analytics database 4 for the user. Preferably, the analytics script 1 creates each time a new value for the key parameters are triggered a message (preferably a JSON object) to the user space, preferably a cookie 3 and to the analytics database 4.

When a specific user accesses/visits/consults the digital media or a page of the digital media, the system, the method, the server and/or the digital media 2 is configured to detect the profile of the user. This is preferably done by reading the information stored on the user space or in other words by requesting the user information stored on the user space. The read/requested user information is preferably the profile. However, it would also be possible that the user information is the user identifier or the key parameters of the user from which the profile will be retrieved then. Based on the profile of the user, the personalized content or the building block matching the profile of the user is retrieved from the digital information database to be displayed on the digital media (preferably in the personalization area).

The system, the method, the server and/or the machine learning engine 5 is configured to predict a profile of a specific user based on the key parameters of the specific user. The system, the method, the server and/or the machine learning engine 5 could update continuously the profile of the users based on the updated key parameters of the users and/or based on a feedback of the user in a retraining event. The continuous update could be done periodically, or with every update of the key parameters of the user. Preferably, the system, the method, the server and/or the machine learning engine 5 can retrieve the key parameters of the users from the analytics database 5 and if the resulting profile from the machine learning engine 5 is different than the previously stored profile, the profile is updated in the analytics database 5 and/or in the user space.

The system, the method and/or the server comprise preferably a training phase and an operation phase. The operation phase corresponds to the normal working mode of the system or method as described before. The training phase is used to train the machine learning engine 5.

In the training phase, the system, the method, the server and/or the digital media 2 is configured to show the different building blocks related to the different profiles independently from the profile of the users. The different building blocks are preferably showed randomly to the visiting users. Preferably, the different building blocks of the (four) profiles (except for the neutral profile) are shown equally often to the users. The building block of the neutral profile is preferably not shown (orshown less frequent than the building blocks of the other profiles). This increases the data created for training the machine learning engine 5 for the four profiles. The monitoring of the key parameters of the visiting users works as described for the operation phase. The system, the method, the server and/or the machine learning engine 5 is configured to be trained based on the feedback received from the CTA clicks of the different profiles shown and the other key parameters tracked/stored/monitored. If the user clicks on a building block related to a specific profile, the machine learning engine 5 knows thus that the key parameters of this users can be used to train the engine 5 for this specific profile.

Preferably, the operation phase comprises preferably a first portion of visiting users which see the building blocks based on their attributed profile and a second portion of visiting users which see the building blocks independent from their attributed profile. The first portion is preferably larger than the second portion. Preferably, the first portion is larger than 90%, preferably 95%. Preferably, the second portion is smaller than 10%, preferably 5%. The same user can fall once in the first portion and for the next visit in the second portion. The decision if a visiting user falls in the first or second portion is preferably chosen randomly or by deterministic algorithm, e.g. every tenth visitor falls in the second portion. For the visitors of the first portion, the functioning of the system is as explained above for the operational phase. For the visitors of the second portion, the functioning of the system is as explained above for the training phase. In fact, this second portion is used for retraining and to have a control group to measure the effect of the personalization. Thus, the machine learning engine 5 is continuously retrained based on the feedback of the users of the second portion from their CTA clicks and based on their monitored key parameters.

The personalization system according to the invention uses profiles which distinguishes based on the type of decision taking of the users instead of a content and demographic profiling. The personalization approach of the present invention can very well be combined with content based and demographic profiling. This can be done by selecting first a product or service or topic to show based on the personalized and/or demographic profiling. Then the selected product, service or topic is shown differently based on the profile of the present invention taking into account the decision taking approach of the users. Tests showed that this approach of personalization can improve the CTR and the CR by up to 30%.

The monitoring of a set of key parameters describing the actions of these visitors, will allow the categorization of each visitor under one of the profiles in the list. Advantageously, this approach can be automized by using different machine learning techniques, which can be executed in real-time and thus being applicable to a variety of digital media, for example web advertisements, online customer journeys, ... , as all of these digital media only have a very small timeframe to respond to a demand for digital information.

To monitor the set of key parameters and customize the digital media, an analytics script has to be implemented on the digital media itself. This script will perform the monitoring of said digital media, the communication with the analytics database of the system through an API and provide information to the digital information database of the publisher of digital information. When a visitor consults the digital media, the script will receive a profile prediction, which is being pushed from the machine learning, including the most appropriate profile found at that time. This profile prediction is then stored in a cookie on the computer readable medium of the visitor or in the data layer of the digital medium. The digital information system of the publisher will then read said cookie or said data layer to obtain the predicted profile and then query a comprised digital information database for the appropriate building blocks and return these in a response to said digital medium. The digital medium will then use these building blocks to create the appropriate representation of the digital information. Said representation of digital information will then be optimized to have a high click-through-ratio and call to action for the predicted profile of the visitor.

Preferably, said series of parameters contain, but are not limited to the following parameters: the number of pageviews and average time spend on the digital media and its specific pages, the type of content that has been consumed, the scrolling behaviour on a page, the number of return visits within 1 week, etc.

The script will further provide a feedback loop between the digital media and the analytics database, meaning that it can further enrich the data captured in the analytics database with the identifier of the predicted profile. This feedback data can then be used further to improve the algorithm of the machine learning engine, increasing the accuracy of the predictions and thus further improve the return on investments for the publisher and the advertiser.

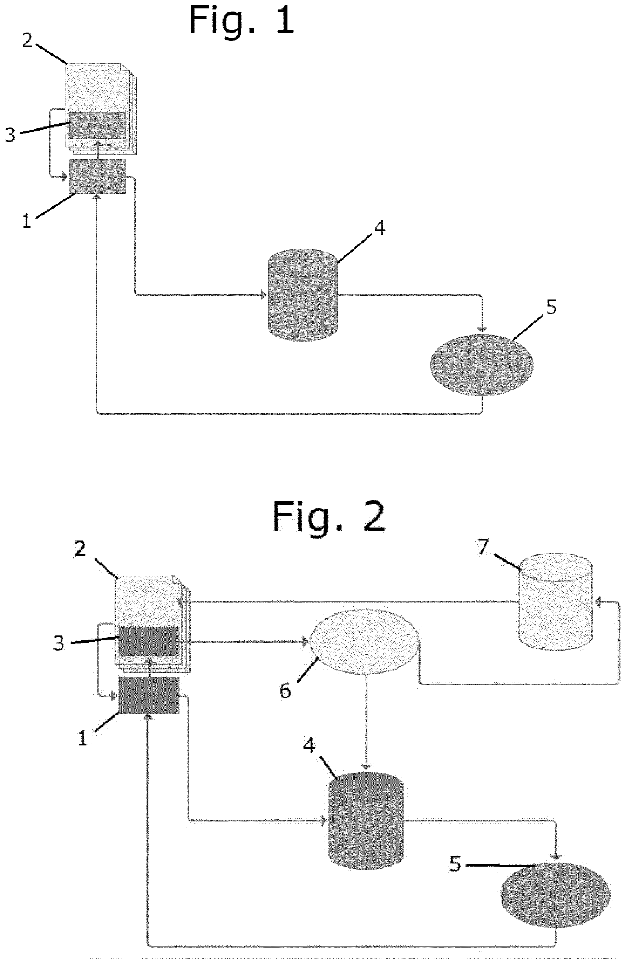

Figure 1 is a schematic representation of the invention, representing the different elements of the system and the interaction between these elements. The system comprises an analytics script 1_allowing to monitor the actions of a visitor on the digital media 2 of the publisher and to allow interaction with a cookie 3 stored on a computer readable medium of the visitor or the data layer of the digital medium of the publisher. The analytics script itself is written in such a way that it can be easily added/embedded into digital media, being for example a website or web application. Said analytics script further monitoring a set of actions made by said visitor on said digital medium and sending a signal comprising a set of key parameters identifying said actions via an API to an analytics database 4, said analytics database storing this signal under the form of data. The signal or the data comprise(s) a series of key parameters identifying the actions (scrolling behaviour, time spend on a page, content consumed, ...) of visitors on said digital medium of the publisher. Said data stored in said analytics database will be analysed and processed by artificial intelligence, and more specifically by a machine learning engine 5. Said machine learning engine will match the data contained in the analytics database to one of the profiles defined in the series of profiles. In order to do this, the machine learning engine can make use of one of many known predictive models. An example of such a predictive model is the decision tree model. By using said decision tree learning model, the machine learning engine will predict the chance that each nth profile out of the series of profiles matches to the analysed data. The nth profile out of the series with the highest predicted chance will be selected as the best matching profile. Said best matching profile will then be encapsulated in a return signal which will be send back to said analytics script.
Figure 2 is a schematic representation of an implementation of the invention in an already existing digital information system of a publisher: When a visitor consults the information on a digital medium 2, said machine learning engine 5 will perform a real-time analysis of the key parameter data captured by said analytics script 1, stored in the analytics database 4 for said visitor, and predict the profile which matches best with the analysed key parameters of the visitor out of the predefined list of profiles.

Afterwards a signal containing information regarding the predicted profile of the unique user will be pushed back to the analytics script 1. The script will then write data comprising the predicted profile to a cookie on the computer readable medium of the visitor or to the data layer of said digital medium, so the digital information management system or CMS (Content management system) 6 or Ad Server can consult said cookie or said data layer of said digital medium and use it to obtain digital information matching said predicted profile. Said digital information management system or CMS or Ad Server containing different digital information building blocks adapted for each of the profiles available in the defined list of profiles, in order to optimize the efficiency of the digital information according, thus optimizing the relevancy of the information and the ROI for the person paying for this digital information, the revenue of the publisher being payed to show the digital information and the user experience of the visitor.

A system according to the presented solution can be installed for instance at a publisher of digital advertisements concerning objects such as cars on a website as digital medium. The list of profiles can be for example based on the profiles presented by the buying modalities framework. Said buying modalities framework describes 4 different buying modalities identifying the buying behaviour of human beings. These 4 profiles would describe:
1. A competitive buyer
2. A spontaneous buyer
3. A methodical buyer
4. A humanistic buyer

The advertisement to be presented can then be split up into different building blocks, one building block contains the picture of the object, such as the picture of the car, a second building block contains for example the CTA button and another building block comprises the subtitle of the advertisement. A version of each building block adapted to each profile according to the buying modalities framework should then be made available on the content management system of the publisher of the digital advertisement.

For example for a methodical buyer, the subtitle will mention an advanced technological feature and the CTA button will propose to download the brochure to have more technical information. For the humanistic buyer, the CTA button can comprise a message like "order a test drive" and the subtitle comprise a tag line explaining that a dealer is nearby and always at your service.

From the moment a visitor navigates to the website of said publisher, his/her behaviour will be tracked by said analytics script, which will start monitoring the key parameters for said visitor and send them through an API to the analytics database of the system.

The system can also optionally be pretrained by feeding pretraining data to the analytics database, coming from an already existing analytics database of the publisher (google analytics, adobe analytics, ...). Said pretraining data containing a set of key parameters and the corresponding profiles.

The system will then start predicting the most relevant profile out of said list of profiles, matching the key parameters collected for a visitor and made available in the analytics database. Said analytics script will then obtain a signal comprising an identifier for said most relevant profile. Said identifier will be stored in a cookie on the computer readable medium of said visitor. When the visitor navigates back on the website of the publisher, the CMS system of said publisher of car advertisements obtains the identifier from said cookie, and select the building blocks for the CTA button and the subtitle matching said most relevant profile. These building blocks will then be assembled to create the advertisement and shown to the visitor of the digital medium, making the advertisement more relevant and attractive for said visitor. The presentation of the car for a visitor matching the humanistic profile for example will show the car, but with a subtitle and a CTA button which is different according to the presentation of the car for a visitor matched with the methodical profile.

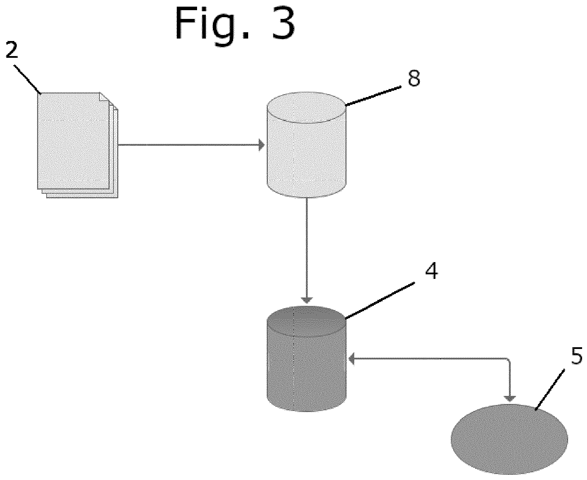

Figure 3 shows a schematic representation of the pretraining phase of the machine learning engine. The pretraining will be done by analysing the actions and events which were already monitored by an analytics database 8 of the publisher. Examples of such analytics database are : Google Analytics, Adobe Analytics, ... . The information contained in these database will be copied over to the analytics database of the system according to the invention 4 and afterwards analysed by the machine learning 5. This Pretraining increases the prediction accuracy of the system during the initial phase.

It should be understood that the present invention is not limited to the described embodiments and that variations can be applied without going outside of the scope of the appended claims.

## Claims

1. A method, performed by a processor, for personalizing content and/or presentation of digital information on a digital media according to a predicted profile out of a series of profiles comprising:
i) Defining a series of profiles (n₁, ... , nₙ) under which visitors of the digital media can be categorized, the series of profiles n₁, ... , nₙ comprising a competitive profile, a spontaneous profile, a methodical profile and a humanistic profile;
ii) Creating building blocks (b₁, b₂, ..., bₓ) of digital information in a digital information database, each building block of the building blocks is matching to at least one profile in a series of predefined profiles n₁, ... nₙ,
iii) Attributing by a machine learning engine, one specific profile from said series of profiles (n1, ... , nₙ) to a specific user consulting said digital media, by analysing a series of key parameters (p₁, p₂, ... p_{z}) related to said specific user, and writing user information allowing the identification of the profile attributed to the specific user a user space of said specific user on a computer readable medium of said specific user or to a computer readable medium of said digital medium,
iv) Reading said user information of said user space to obtain said attributed profile for said specific user,
v) Presenting at least one of the building blocks containing digital information adapted to said attributed profile.

2. Method according to claim 1, wherein the series of profiles (n₁, ... , nₙ) classify users based on the velocity to take decisions and the emotionality (logic vs emotional) to take a decision.

3. Method according to one of the previous claims, wherein the series of key parameters (p₁, p₂, ... p_{z}) related to said specific user comprise the content consumed on the digital media.

4. Method according to the previous claim, wherein the series of key parameters of the specific user comprise further at least one of a number of return visits on digital media, a number of page visits of the digital media, a time spent on a page of the digital media, a time spent on the digital media, a scrolling behaviour, a call to action (CTA) clicks.

5. Method according to claim 3 or 4, wherein the content of the digital media is categorized into different content types related to different profiles of the set of profiles, wherein the content consumed indicates the amount of different content types consumed by the specific user.

6. Method according to the previous claim comprising the step of receiving user input from an administrator user for categorizing the content of the digital media into different content types.

7. Method according to one of the previous claims, wherein the user space of the specific user is a cookie of the specific user.

8. Method according to one of the previous claims, wherein the user information comprises one or more of an identifier of the specific user and/or at least some or all of the set of key parameters of the specific user.

9. Method according to one of the previous claims, wherein the building blocks (b₁, b₂, ..., bₓ) of digital information in a digital information database comprises a first building block containing digital information matching to the competitive profile, a second building block containing digital information matching to the spontaneous profile, a third building block containing digital information matching to the methodical profile, a fourth building block containing digital information matching to the humanistic profile, wherein the digital information of the first to fourth building blocks are distinct from each other.

10. Method according to the previous claim, wherein the building blocks (b₁, b₂, ..., bₓ) created in the digital information database are related to one or more products or services, wherein the building blocks (b₁, b₂, ..., bₓ) comprise personalized building sub-blocks and at least one non-personalized building sub-block, wherein the building block presented for each profile comprises a combination of the at least one non-personalized building sub-block and at least one further personalized building block related to the attributed profile of the specific user. Method according to one of the previous claims comprising the step of training the machine learning engine by showing the different building blocks matching to the different profiles independently from a profile of the users visiting the digital media, wherein the machine learning engine is trained based on the reaction of the users on the building block randomly shown to the users and based on the key parameters of the users.

11. Method according to the previous claim comprising a training phase in which the building blocks matching to the different profiles are shown independently from a profile of the users visiting the digital media and a personalized phase in which the building blocks matching different profiles are shown to the users visiting the digital media based on the profiles attributed to the users, wherein the building blocks matching different profiles are shown to a certain portion of the users visiting the digital media in the personalized phase independent from a profile, wherein the machine learning engine is continuously trained in the personalized phase based on the reaction of the certain portion of users on the building blocks shown to them independent from a profile and based on the key parameters of these users.

12. A system for personalizing digital information to be displayed on a digital media, the system comprising at least one processor, the system comprising:
i) A digital information database, comprising a series of building blocks for said digital information, each building block in the series of building blocks matching to at least one profile in a series of predefined profiles n₁, ... nₙ, said digital information management system sending the appropriate building block corresponding to a predefined profile in a list of predefined profiles, upon receiving a signal comprising an identifier of said predefined profile
ii) An analytics means for monitoring a set of key parameters of users visiting the digital media,
iii) A machine learning engine matching said key parameters of the users visiting the digital media to one of the profiles of said predefined series of profiles (n₁,n₂,... nₙ)
iv) The system being configured to show to a specific user visiting the digital media the building block matching to the profile being matched to the key parameters of the specific user.

13. The system according to the previous claim comprising an analytics script implemented on said digital media publishing the digital information, said script collecting said values corresponding to said key parameters defined in said series of key parameters, said script sending a signal comprising said values corresponding to said key parameters defined in said series of key parameters to said analytics database, said script receiving a signal comprising a profile prediction made by said machine learning engine for the visitor currently consulting the digital medium, said profile prediction containing an identifier of said predicted profile in the list of predefined profiles n₁, ... nₙ, said analysis script storing said identifier of said matched profile in a cookie or data layer, written on the computer readable medium of said digital media publishing said digital information. Said cookie or said data layer can be read out by a digital information system of the publisher to obtain said matched profile in order to query a digital information database from the publisher for building blocks matching said predicted profile.

14. System according to claim 13 or 14, wherein an analytics database stores values corresponding to key parameters defined in the series of key parameters (p₁,p₂,...,p_{z}).
